# DEMANDE DE BREVET EUROPEEN

(11) **EP 1 928 201 A1**
(43) Date de publication de la demande: **04.06.2008**
(21) Numéro de dépôt: 07121260.9
(22) Date de dépôt: 22.11.2007
(51) Int. Cl.: H04Q 7/38

(54) **Procédé de transfert d'une communication téléphonique d'un réseau sans fil à un autre, et terminal téléphonique mobile bi-mode correspondant**

(30) Priorité: 28.11.2006 FR 0655134
(71) Demandeur: Alcatel Lucent, 75008 Paris (FR)
(72) Inventeur: Gass, Raymond, 67150, BOLSENHEIM (FR); Rousseau, Jean-René, 95000, NEUVILLE S/OISE (FR)
(74) Mandataire: Sciaux, Edmond

(57) **Abrégé**

Ce procédé permet de transférer une communication téléphonique (B1-B2), établie entre un terminal sans fil bi-mode (T1) et un autre terminal (T2), le terminal bi-mode ayant accès simultanément à un réseau sans fil global (PLMN) et à un réseau sans fil local (WLAN), ce dernier comportant un autocommutateur (PBX) apte à réaliser une conférence téléphonique à trois, et possédant une liaison permanente (IPL) vers le réseau global (PLMN). La communication (B1,B2) est supportée d'abord par le réseau local (WLAN) **sans** passer par le réseau global (PLMN), et elle doit être supportée ensuite par le réseau local (WLAN) **et** le réseau global (PLMN). Il consiste à demander à cet autocommutateur (PBX) :
- l'établissement d'une seconde communication (B3-B2) entre le terminal bi-mode (T1) et le second terminal (T2) via le réseau local (WLAN) **et** le réseau global (PLMN) ;
- puis l'établissement d'une conférence téléphonique (B1-B2-B3) réunissant la première et la second communication ;
- puis le relâchement la première communication en laissant subsister la seconde communication (B1- B3) .

## Description

L'invention concerne un procédé de transfert d'une communication téléphonique d'un réseau de télécommunication global sans fil, de type GSM par exemple, à un réseau de télécommunication local sans fil, de type Wifi ou Bluetooth par exemple, et inversement. Elle concerne également un terminal bi-mode comportant des moyens pour mettre en oeuvre ce procédé. Elle concerne plus particulièrement les réseaux locaux sans fil qui comportent au moins un autocommutateur apte à établir une conférence téléphonique.

Un terminal de téléphonie mobile bi-mode dispose de deux interfaces radio, permettant respectivement de communiquer via un réseau de télécommunication global sans fil, selon la norme GSM par exemple, et/ou via un réseau de télécommunication local sans fil, selon la norme Wifi par exemple, ce dernier étant relié à un réseau public de télécommunication, fixe, par une liaison permanente utilisant le protocole Internet (appelé liaison IP dans ce qui suit) qui permet des communications téléphoniques du type Voix sur Protocole Internet (VOIP, Voice Over IP).

Le réseau global offre une couverture à l'échelle d'un pays mais les communications sont coûteuses. Le réseau local offre une couverture plus restreinte, incluse dans la couverture précédente, mais les communications du type voix sur protocole Internet (VolP, Voice over IP) sont peu coûteuses. Un centre commercial ou un aéroport peut être équipé d'un réseau local sans fil, accessible au public.

Quand un réseau local sans fil couvre le site d'une entreprise, ou l'appartement d'un particulier, l'utilisation de ce réseau local doit être privilégiée pour les communications téléphoniques, en raison de son faible coût. Le terminal étant mobile, le problème se pose de transférer une communication téléphonique entre les deux réseaux, sans interrompre cette communication téléphonique, et sans délai gênant pour les utilisateurs.

On connaît un procédé appelé UMA (Unlicensed Mobile Access) pour réaliser un tel transfert entre un réseau global, de type GSM ou dérivé, et un réseau local, de type Wifi ou Bluetooth par exemple. Ce procédé connu nécessite de modifier le réseau GSM, en y installant des serveurs spécifiques appelés contrôleurs UMA qui commandent automatiquement le transfert d'une communication du réseau global vers le réseau local, et inversement. Selon le procédé UMA, quand un terminal téléphonique mobile est en communication via une station de base GSM et qu'il détecte la possibilité de se connecter à un réseau local sans fil, le contrôleur UMA commande le transfert de la communication sur la liaison IP qui relie le réseau local à un réseau public fixe. Le contrôleur UMA transforme le signal provenant du terminal téléphonique mobile, via la liaison IP, pour le faire apparaître comme provenant d'une autre station de base GSM, virtuelle. Par conséquent, quand un terminal téléphonique mobile entre dans la zone de couverture d'un réseau local sans fil (où il a un droit d'accès), le coeur du réseau téléphonique GSM considère simplement que ce terminal a changé de station de base GSM, comme pour un transfert intercellulaire classique. Il n'y a donc pas de coupure de communication pendant que ce terminal téléphonique passe d'une liaison radio GSM à une liaison radio Wi-Fi ou Bluetooth, ou inversement.

L'inconvénient de ce procédé est de nécessiter une modification du réseau global considéré, ce qui entraîne des coûts d'installation et des coûts de fonctionnement que l'opérateur du réseau global fait payer à l'utilisateur.

Le but de l'invention est de proposer un procédé qui ne nécessite pas de modification dans le réseau global.

Un premier objet de l'invention est un procédé de transfert d'une communication téléphonique, établie entre un terminal sans fil bi-mode et un autre terminal, le terminal bi-mode ayant accès simultanément à un réseau sans fil global et à un réseau sans fil local, ce dernier comportant un autocommutateur apte à réaliser une conférence téléphonique à trois, et possédant une liaison permanente vers le réseau global ; cette communication étant supportée d'abord par le réseau local **sans** passer par le réseau global, et devant être ensuite supportée par le réseau local **et** le réseau global ; **caractérisé** en ce qu'il consiste à demander à cet autocommutateur :
- l'établissement d'une seconde communication entre le terminal bi-mode et le second terminal via le réseau local **et** le réseau global ;
- puis l'établissement d'une conférence téléphonique réunissant la première et la second communication ;
- puis le relâchement la première communication en laissant subsister la seconde communication.

Un deuxième objet de l'invention est un procédé de transfert d'une communication téléphonique, établie entre un terminal sans fil bi-mode et un autre terminal, le terminal bi-mode ayant accès simultanément à un réseau sans fil global et à un réseau sans fil local, ce dernier comportant un autocommutateur apte à réaliser une conférence téléphonique à trois et possédant une liaison permanente vers le réseau global ; cette communication étant supportée d'abord par le réseau local **et** le réseau global, et devant être ensuite supportée par le réseau local **sans passer par le réseau global ;**
**caractérisé** en ce qu'il consiste à demander à cet autocommutateur :
- l'établissement d'une seconde communication entre ce terminal bi-mode et le second terminal via le réseau local **sans passer par** le réseau global ;
- puis l'établissement d'une conférence téléphonique réunissant la première et la second communication ;
- puis le relâchement la première communication en laissant subsister la seconde communication .

L'invention a aussi pour objet un terminal téléphonique sans fil bi-mode, comportant deux interfaces radio respectivement aptes à établir une première et une seconde communications respectivement et simultanément dans un réseau local et un réseau global de télécommunication sans fil ; **caractérisé** en ce qu'il comporte en outre des moyens de commande couplés aux deux interface radio, et aptes à commander les interfaces radio pour envoyer des messages à un autocommutateur situé dans le réseau local pour demander à cet autocommutateur :
-- lors du transfert d'une première communication déjà établie dans le réseau local **sans passer par le réseau global,** et devant être transférée dans un réseau global,
   --- l'établissement d'une seconde communication entre le terminal bi-mode et un second terminal, via le réseau local **et** le réseau global ;
   --- puis l'établissement d'une conférence téléphonique réunissant la première et la second communication ;
   --- puis le relâchement la première communication en laissant subsister la seconde communication ;
-- lors du transfert d'une première communication déjà établie dans un réseau global **et** un réseau local, et devant être transférée dans ce réseau local **sans passer par ce réseau global,** envoyer des messages à un autocommutateur situé dans le réseau local, pour demander à cet autocommutateur :
   --- l'établissement d'une seconde communication entre ce terminal bi-mode et un second terminal, via le réseau local **sans** passer par le réseau global ;
   --- puis l'établissement d'une conférence téléphonique, réunissant la première et la second communication ;
   --- puis le relâchement de la première communication en laissant subsister la seconde communication.

L'invention sera mieux comprise et d'autres caractéristiques apparaîtront à l'aide de la description ci-dessous et des figures l'accompagnant:
- La figure 1 illustre une première étape de la mise en oeuvre du procédé selon l'invention.
- La figure 2 illustre une deuxième étape de la mise en oeuvre du procédé selon l'invention.
- La figure 3 illustre une troisième étape de la mise en oeuvre du procédé selon l'invention.
- Les figures 4, 5, 6 illustrent le transfert en sens inverse.
- La figure 7 représente le schéma synoptique d'un exemple de réalisation du terminal bi-mode selon l'invention.

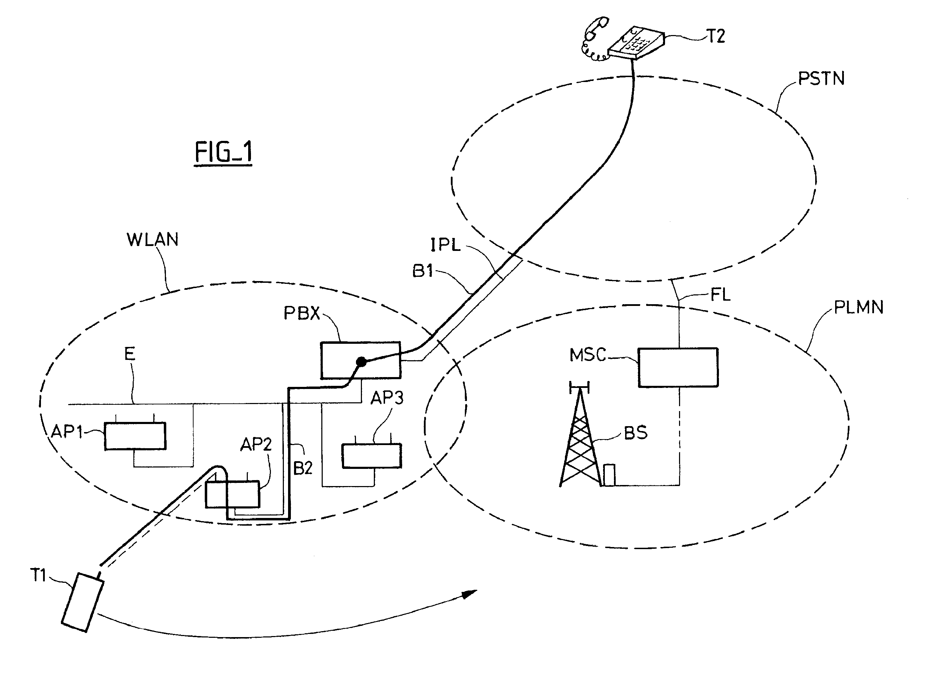

La **figure 1** illustre une première étape de la mis en oeuvre du procédé selon l'invention, dans un exemple où un terminal téléphonique mobile T1, bimode, Wi-fi GSM, est en communication avec un terminal téléphonique T2 d'un réseau public fixe PSTN, via un réseau local sans fil, WLAN de type Wi-fi. Le réseau local WLAN est relié au réseau public fixe PSTN par une liaison IP référencée IPL sur les figures. Le réseau local WLAN comporte un autocommutateur PBX relié à des points d'accès radio AP1, AP2, AP3, par un réseau filaire Ethernet E ; et relié au réseau public fixe PSTN par la liaison IPL. Cet autocommutateur PBX est apte à commuter des communications de type voix sur protocole Internet, à l'intérieur du réseau local WLAN, en fournissant des services supplémentaires, notamment en permettant la conférence à trois.

Au moment où la communication considérée est établie, le terminal T1 est en plein dans la zone de couverture du réseau local WLAN. Le terminal T1 est aussi dans la zone de couverture d'un réseau global sans fil PLMN, de type GSM dans cet exemple. La communication considérée est établie via le réseau local WLAN plutôt que via le réseau global PLMN, pour bénéficier d'un tarif beaucoup plus avantageux. La sélection du réseau est faite manuellement par l'utilisateur, ou par un procédé automatique connu. L'autocommutateur PBX établit une connexion qui comprend une branche B1 reliant l'autocommutateur PBX au réseau public fixe PSTN par la liaison IPL, et une branche B2 reliant l'autocommutateur PBX au terminal T1 par le point d'accès radio AP2.

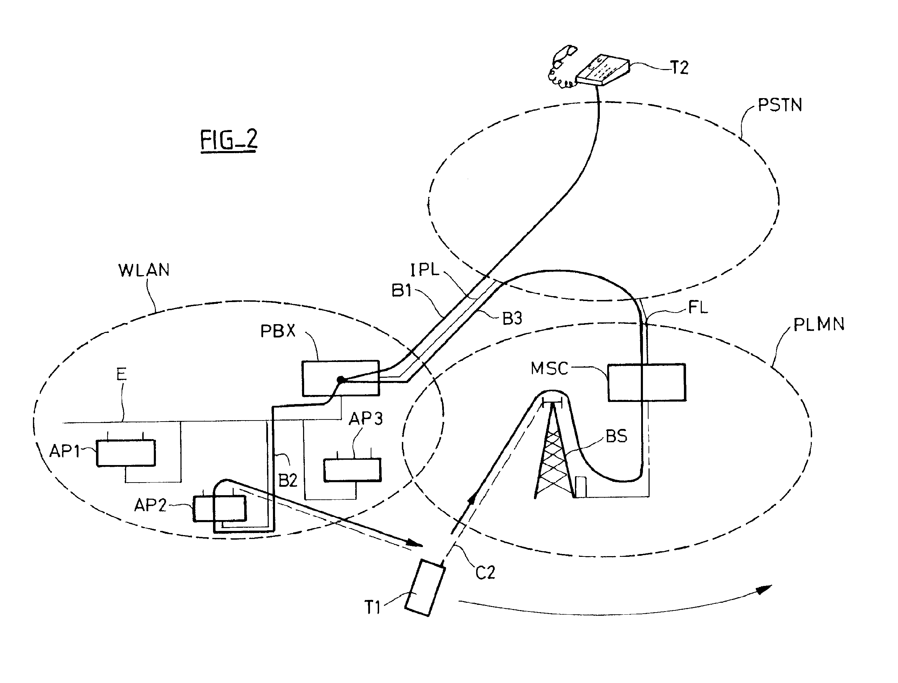

La **figure 2** illustre une deuxième étape de la mise en oeuvre du procédé selon l'invention. Le terminal mobile T1 est en déplacement et il approche de la limite de la couverture radio du réseau local WLAN. Une procédure de transfert de la communication B1-B2 du réseau local WLAN au réseau global PLMN est déclenchée, soit automatiquement par le terminal T1 quand il détecte une baisse de l'amplitude du signal reçu du point accès AP2, et qu'il ne peut pas non plus utiliser un des autres points accès radio AP1 et AP3 ; soit manuellement par l'utilisateur du terminal T1.

L'interface radio GSM du terminal bi-mode T1 écoute périodiquement les stations de base GSM qu'elle peut capter. Elle sait qu'elle peut établir une communication via la station de base BS dans cet exemple. Par son interface GSM, le terminal bi-mode T1 demande l'établissement d'une seconde communication, en envoyant au commutateur du service mobile, MSC, un message contenant un numéro appelé et un numéro appelant qui sont tous les deux le propre numéro du terminal T1 dans le plan de numérotation public qui est commun au réseau global sans fil PLMN et au réseau public fixe PSTN. Ce numéro comporte un premier champ qui désigne l'autocommutateur PBX et un second champ qui désigne l'extension constituée par le terminal T1 lorsqu'il relié au réseau local WLAN. Le commutateur du service mobile MSC communique avec l'autocommutateur PBX via le réseau fixe PSTN, une liaison fixe référencée FL, reliant le commutateur du service mobile MSC au réseau public fixe PSTN.

Cette seconde communication est établie de manière classique, dans le réseau local WLAN, par le procédé dit de sélection automatique à l'arrivée : l'autocommutateur PBX est désigné par le premier champ du numéro ; il reçoit le numéro appelé et en extrait le second champ, puis envoie un signal d'appel à l'extension dont le numéro est contenu dans ce second champ. En l'occurrence, l'autocommutateur PBX sait que cette extension est le terminal mobile bi-mode T1, qui s'est associé au point d'accès radio AP2. L'autocommutateur PBX réalise une connexion entre la branche B2 et une nouvelle branche B3 qui relie l'autocommutateur PBX au réseau global PLMN.

Le terminal mobile T1 reçoit donc une notification d'appel, sur son interface Wi-fi, de manière classique. Il reçoit des données de signalisation qui contiennent le numéro de l'appelé et le numéro de l'appelant. Selon l'invention, le terminal T1 comporte des moyens pour :
- analyser ce numéro de l'appelant,
- détecter si le numéro de l'appelant est identique au numéro de l'appelé (son propre numéro),
- et si c'est le cas : accepter une seconde communication, puis demander une mise en conférence de cette seconde communication B2-B3 avec la première communication B1-B2, de manière classique pour une conférence à trois (Dans les cas où le terminal reçoit un second appel sur l'interface radio Wi-fi pendant qu'il est en communication via l'interface radio GSM, il envoie un signal refusant le second appel).

Le terminal bimode T1 est alors en communication avec le terminal T2 simultanément par deux communications téléphoniques, B1-B2 et B1-B3, mises en conférence.

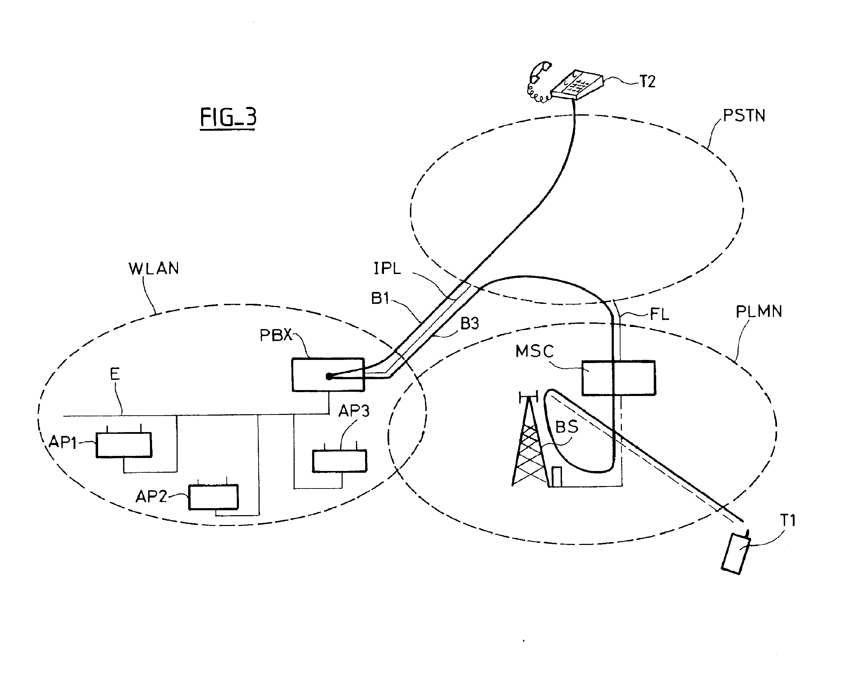

La **figure 3** illustre une troisième étape de la mise en oeuvre du procédé selon l'invention. Le terminal T1 reçoit sur son interface radio Wi-fi un message de signalisation lui indiquant que l'autocommutateur PBX a réalisé la mise en conférence qu'il a demandé. Le terminal T1 demande alors automatiquement à l'autocommutateur PBX de relâcher la première communication. L'autocommutateur PBX relâche la branche B2. Il maintient la connexion entre la branche B3 et la branche B1. La seconde communication B1-B3 remplace la première communication sans aucune gêne pour les utilisateurs : Il n' y a aucune interruption puisque les deux communications coexistent pendant un certain temps.

Pour les utilisateurs, tout se passe comme si le segment radio de la communication avait été transféré instantanément du réseau local WLAN au réseau global PLMN. Il est à noter que la communication continue à passer par l'autocommutateur PBX, et donc l'utilisateur du terminal T1 continue à bénéficier des services que peut fournir cet autocommutateur.

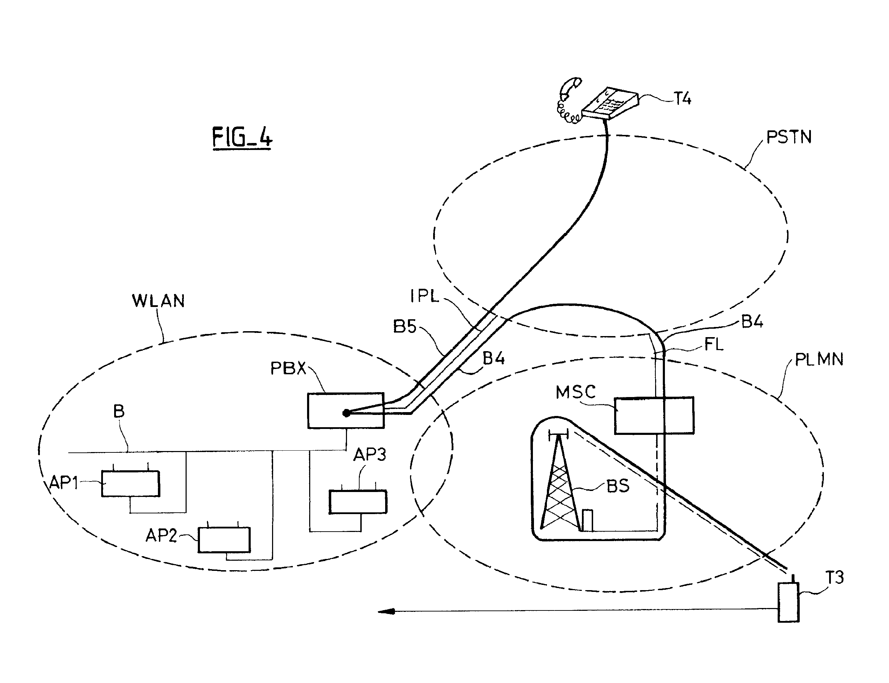

Inversement, les **figures 4****,** **5****,** **6** illustrent le **transfert en sens inverse,** c'est à dire du réseau global PLMN vers le réseau local WLAN. Ces réseaux sont les mêmes que sur les figure 1 à 3, ils ne seront donc pas re-décrits.

La **figure 4** illustre une première étape du transfert en sens inverse. Au départ, un terminal téléphonique mobile T3, bimode, Wi-fi / GSM, est en communication avec un terminal téléphonique T4 du réseau public fixe PSTN, via le réseau global sans fil, PLMN. Il est à remarquer que cette communication passe en outre par l'autocommutateur PBX du réseau local sans fil, WLAN, pour les raisons suivantes. Ce terminal T3 et le réseau local WLAN appartiennent typiquement à une entreprise. Les appels sortant de cet autocommutateur PBX, et devant utiliser le réseau global PLMN, bénéficient d'un tarif particulièrement intéressant, de la part de l'opérateur du réseau global PLMN, en raison du nombre élevé des appels facturés à l'entreprise. D'autre part, l'utilisateur du terminal T3 a intérêt à demander l'établissement de ses appels GSM par l'intermédiaire de l'autocommutateur PBX de l'entreprise qui l'emploie, parce qu'il a alors à sa disposition de services supplémentaires fournis par cet autocommutateur, notamment un annuaire de l'entreprise.

A l'instant où la communication est établie, le terminal T3 est loin de la zone de couverture du réseau local WLAN. Mais il est dans la zone de couverture du réseau global sans fil PLMN. La sélection du réseau est faite manuellement par l'utilisateur, ou par un procédé automatique connu. L'autocommutateur PBX établit une connexion entre une branche B4 reliant l'autocommutateur PBX au réseau global PLMN via la liaison IPL et le réseau public fixe PSTN, et une branche B5 reliant l'autocommutateur PBX au terminal T4 par la liaison permanente IPL.

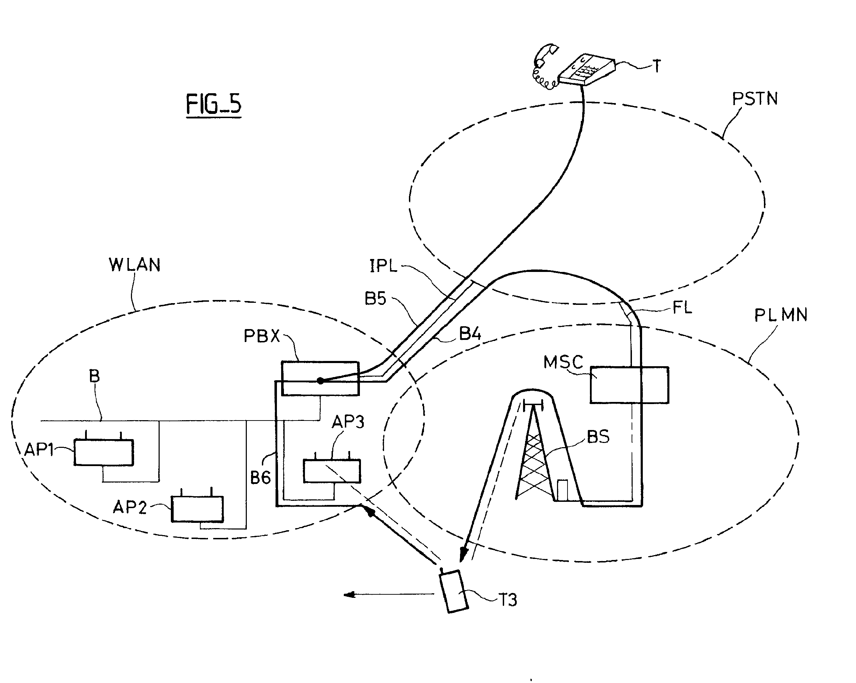

La **figure 5** illustre une deuxième étape de la mise en oeuvre du procédé selon l'invention. Le terminal mobile T3 est en déplacement et il entre dans la zone de couverture du réseau local WLAN. L'interface Wi-fi du terminal bi-mode T3 est à l'écoute des points d'accès Wi-Fi, périodiquement. Une procédure de transfert de la communication du réseau local WLAN au réseau global PLMN est déclenchée, soit automatiquement par le terminal T3 quand il détecte qu'il est dans la zone de couverture du réseau local WLAN, et qu'il a vérifié qu'il a le droit d'accéder à ce réseau, soit manuellement par l'utilisateur du terminal T3.

L'interface Wi-fi du terminal bi-mode T3 s'associe au point accès AP3, par exemple, puis se fait authentifier par le réseau local WLAN, selon un procédé connu. Le terminal T3 signale sa présence à l'autocommutateur PBX. L'autocommutateur PBX sait que le terminal T3 est associé au point d'accès AP3, par un procédé classique. Il est désormais capable d'acheminer une communication vers ce terminal T3, s'il est appelé.

Puis le terminal T3 demande à l'autocommutateur PBX l'établissement d'une seconde communication, en appelant un numéro qui est son propre numéro dans le plan de numérotation commun au réseau public fixe PSTN et au réseau global PLMN. Ce numéro comportant un premier champ qui désigne l'autocommutateur PBX et un second champ qui désigne l'extension constituée par le terminal T3 lorsqu'il relié au réseau local WLAN.

Pendant ce temps, le terminal T3 continue à communiquer avec le terminal T4 via la station de base BS, le commutateur du service mobile MSC, et la liaison fixe FL.

L'autocommutateur PBX reçoit le message demandant l'établissement d'une seconde communication. Il établit cette seconde communication de manière absolument classique :
- Il établit une nouvelle branche B6 qui relie l'autocommutateur PBX au point accès AP3 puisque le terminal T3 s'est associé à ce point d'accès AP3 ;
- il connecte cette nouvelle branche B6 avec la branche B5 qui va au terminal T3 qui est désigné par le numéro demandé.

Le terminal mobile T3 reçoit donc une notification d' appel, sur son interface GSM, de manière classique. Il reçoit des données de signalisation qui contiennent le numéro de l'appelé et le numéro de l'appelant. Selon l'invention, le terminal T3 comporte des moyens pour :
- analyser ce numéro de l'appelant,
- détecter si le numéro de l'appelant est identique au numéro de l'appelé (son propre numéro),
- et si c'est le cas : accepter la seconde communication, puis demander une mise en conférence de cette seconde communication B4-B5 avec la première communication B3-B4, de manière classique pour une conférence à trois (Dans les cas où le terminal reçoit un second appel sur l'interface radio GSM pendant qu'il est en communication via l'interface radio Wi-fi, il envoie un signal refusant le second appel).

Le terminal bimode T3 est alors en communication avec le terminal T4 simultanément par deux communications téléphoniques, B1-B2 et B1-B3, mises en conférence, via son interface Wi-fi et son interface GSM simultanément.

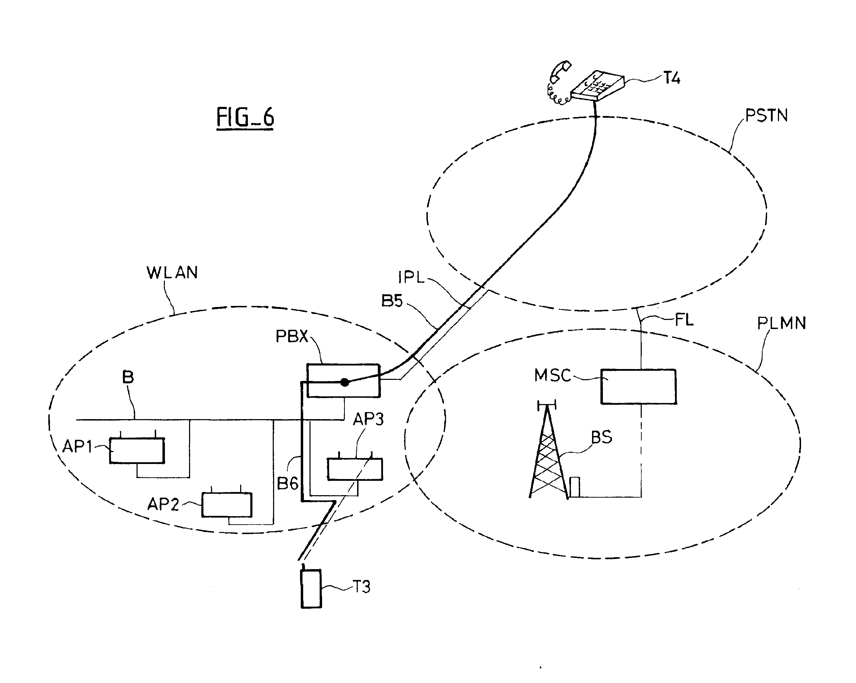

La **figure 6** illustre une troisième étape de la mise en oeuvre du procédé selon l'invention. Dès que l'autocommutateur PBX a indiqué au terminal T3 qu'il a réalisé la mise en conférence, le terminal T3 commande un relâchement de la première communication B4-B5, de manière classique. L'autocommutateur PBX relâche la branche B4. Il maintient la connexion entre la branche B5 et la branche B6. La seconde communication B5-B6 remplace la première communication B4-B5 sans aucune gêne pour les utilisateur : Il n' y a aucune interruption puisqu'il y a un petit temps où les deux communications coexistent. Pour les utilisateurs, tout se passe comme si le segment radio de la communication avait été transféré instantanément du réseau global PLMN au réseau local WLAN.

Ce procédé a pour avantage remarquable qu'il ne nécessite aucune modification dans les équipements du réseau local WLAN et du réseau global PLMN.

Il est à noter que les terminaux T2 et T4 sont des terminaux quelconques du réseau fixe PSTN, mais qu'ils pourraient être des terminaux quelconques du réseau global sans fil PLMN ou d'un réseau local, par exemple le réseau local WLAN lui-même.

Selon une variante de réalisation, au lieu d'appeler son propre numéro pour demande l'établissement d'une seconde communication, le terminal mobile bi-mode, T1 ou T3, pourrait utiliser un procédé connu appelé Accès Directe au Système (DISA : Direct Inward System Access) : Le terminal appellerait un numéro prédéterminé qui lui permettrait d'accéder à l'autocommutateur PBX et de lancer une application particulière. En l'occurrence, l'application particulière établirait une seconde communication. Puis le terminal demanderait à cette application la mise en conférence de la première et la seconde communication, puis lui demanderait le relâchement de la première communication.

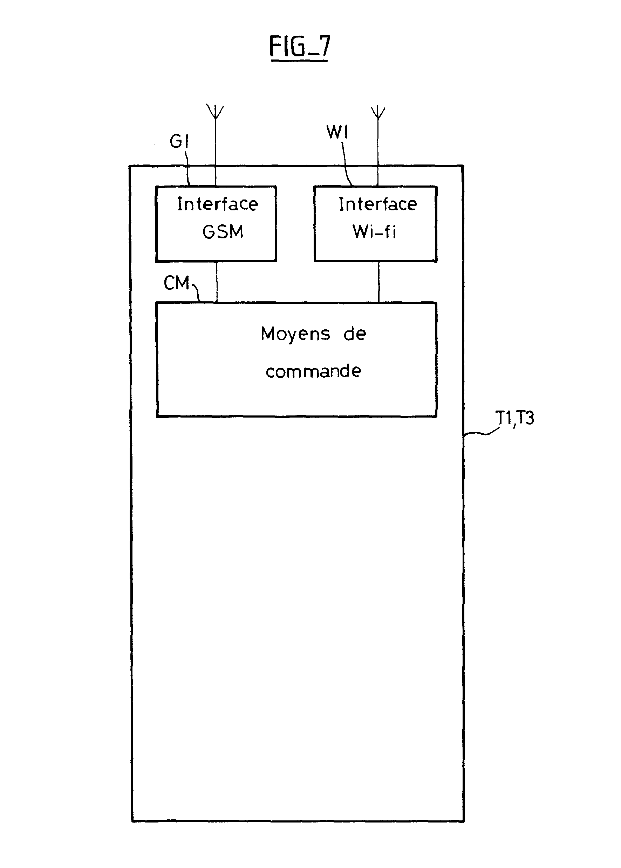

La **figure 7** représente le schéma synoptique d'un exemple de réalisation du terminal bi-mode selon l'invention, par exemple le schéma synoptique des terminaux T1 et T3 mentionnés précédemment en référence aux figures 1-6. Cet exemple de réalisation comporte :
- Une interface radio Gl, classique, pour communiquer avec un réseau mobile global, de type GSM par exemple, tel que le réseau PLMN décrit précédemment ;
- Une interface radio WI, classique, pour communiquer avec un réseau mobile local, de type Wi-fi par exemple, tel que le réseau WLAN décrit précédemment ;
- des moyens de commande CM couplés aux deux interface radio, Gl et Wl, et constitué d'un microprocesseur exécutant un programme réalisant les opérations suivantes :
   -- Pour transférer d'un réseau local tel que WLAN vers un réseau global, tel que PLMN, une première communication déjà établie dans le réseau local **sans** le réseau global, les moyens de commande CM envoient des messages à un autocommutateur, tel que PBX, situé dans le réseau local pour demander à cet autocommutateur :
      --- l'établissement d'une seconde communication, telle que B1-B3, entre le terminal bi-mode et un second terminal, via le réseau local WLAN **et** le réseau global PLMN ;
      --- puis l'établissement d'une conférence téléphonique, telle que B1-B2-B3, réunissant la première et la second communication ;
      --- puis le relâchement la première communication en laissant subsister la seconde communication B1-B3.
   -- Pour transférer d'un réseau global, tel que PLMN, vers un réseau local, tel que WLAN, **sans** passer par le réseau global PLMN, une première communication, telle que B4-B5, déjà établie dans ce réseau global **et** ce réseau local, les moyens de commande CM envoient des messages à un autocommutateur, tel que PBX, situé dans le réseau local pour demander à cet autocommutateur :
      --- l'établissement d'une seconde communication, telle que B5-B6 entre ce terminal bi-mode et un second terminal, via le réseau local **sans** le réseau global ;
      --- puis l'établissement d'une conférence téléphonique, telle que B4-B5-B6, réunissant la première et la second communication ;
      --- puis le relâchement de la première communication en laissant subsister la seconde communication.

Selon un premier mode de réalisation, les moyens de commande CM sont aptes à commander les interfaces radio Gl et Wl pour envoyer à un autocommutateur du réseau local des messages contenant une demande d' établissement d' appel contenant un numéro appelant et un numéro appelé qui sont constitués tous les eux par le numéro du terminal bi-mode dans le plan de numérotation public commun au réseau global PLMN et au réseau public fixe PSTN.

Selon un second mode de réalisation, les moyens de commande CM sont aptes à commander les interfaces radio Gl et Wl pour envoyer à un autocommutateur des messages contenant une demande d' établissement d'appel contenant un numéro prédéterminé spécifique pour cette demande de transfert de communication.

## Revendications

1. Procédé de transfert d'une communication téléphonique (B1-B2), établie entre un terminal sans fil bi-mode (T1) et un autre terminal (T2), le terminal bi-mode ayant accès simultanément à un réseau sans fil global (PLMN) et à un réseau sans fil local (WLAN), ce dernier comportant un autocommutateur (PBX) apte à réaliser une conférence téléphonique à trois, et possédant une liaison permanente (IPL) vers le réseau global (PLMN) ; cette communication (B1,B2) étant supportée d'abord par le réseau local (WLAN) **sans** passer par le réseau global (PLMN), et devant être ensuite supportée par le réseau local (WLAN) **et** le réseau global (PLMN) ; **caractérisé en ce qu'**il consiste à demander à cet autocommutateur (PBX) :
- l'établissement d'une seconde communication (B3-B2) entre le terminal bi-mode (T1) et le second terminal (T2) via le réseau local (WLAN) **et** le réseau global (PLMN) ;
- puis l'établissement d'une conférence téléphonique (B1-B2-B3) réunissant la première et la second communication ;
- puis le relâchement la première communication en laissant subsister la seconde communication (B1- B3) .

2. Procédé selon la revendication 1, **caractérisé en ce que** pour demander à cet autocommutateur (PBX) l'établissement d'une seconde communication (B3-B2) entre le terminal bi-mode (T1) et le second terminal (T2) via le réseau local (WLAN) **et** le réseau global (PLMN), il consiste à envoyer à l'autocommutateur (PBX) une demande d'établissement d'appel contenant un numéro appelant et un numéro appelé qui sont constitués tous les eux par le numéro du terminal bi-mode (T1) dans le plan de numérotation du réseau local.

3. Procédé selon la revendication 1, **caractérisé en ce que** pour demander à cet autocommutateur (PBX) l'établissement d'une seconde communication (B3-B2) entre le terminal bi-mode (T1) et le second terminal (T2) via le réseau local (WLAN) **et** le réseau global (PLMN), il consiste à envoyer à l'autocommutateur (PBX) une demande d'établissement d'appel contenant un numéro prédéterminé spécifique pour demander un transfert de communication.

4. Procédé de transfert d'une communication téléphonique (B1-B2), établie entre un terminal sans fil bi-mode (T1) et un autre terminal (T2), le terminal bi-mode ayant accès simultanément à un réseau sans fil global (PLMN) et à un réseau sans fil local (WLAN), ce dernier comportant un autocommutateur (PBX) apte à réaliser une conférence téléphonique à trois et possédant une liaison permanente (IPL) vers le réseau global (PLMN) ; cette communication (B1,B2) étant supportée d'abord par le réseau local (WLAN) **et** le réseau global (PLMN), et devant être ensuite supportée par le réseau local (WLAN) **sans passer par le réseau global (PLMN) ;**
**caractérisé en ce qu'**il consiste à demander à cet autocommutateur (PBX) :
- l'établissement d'une seconde communication (B5-B6) entre ce terminal bi-mode (T3) et le second terminal (T4) via le réseau local (WLAN) **sans passer par** le réseau global (PLMN) ;
- puis l'établissement d'une conférence téléphonique (B4-B5-B6) réunissant la première et la second communication ;
- puis le relâchement la première communication en laissant subsister la seconde communication (B5-B6).

5. Procédé selon la revendication 4, **caractérisé en ce que** pour demander à cet autocommutateur (PBX) l'établissement d'une seconde communication (B5-B6) entre ce terminal bi-mode (T3) et le second terminal (T4) via le réseau local (WLAN) **sans** le réseau global (PLMN), il consiste à envoyer à cet autocommutateur (PBX) une demande d'établissement d'appel contenant un numéro appelant et un numéro appelé qui sont constitués tous les eux par le **numéro du terminal** bi-mode (T3) dans le plan de numérotation du premier réseau (WLAN).

6. Procédé selon la revendication 4, **caractérisé en ce que** pour demander à cet autocommutateur (PBX) l'établissement d'une seconde communication (B5-B6) entre ce terminal bi-mode (T3) et le second terminal (T4) via le réseau local (WLAN) **sans** le réseau global (PLMN), il consiste à envoyer à cet autocommutateur (PBX) une demande d'établissement d'appel contenant un numéro prédéterminé **spécifique** pour demander un transfert de communication.

7. Terminal téléphonique sans fil bi-mode (T1 ; T3), comportant deux interfaces radio (Wl, GI) respectivement aptes à établir une première et une seconde communications respectivement et simultanément dans un réseau local (WLAN) et un réseau global (PLMN) de télécommunication sans fil ; **caractérisé en ce qu'**il comporte en outre des moyens de commande (CM) couplés aux deux interface radio, et aptes à commander les interfaces radio pour envoyer des messages à un autocommutateur (PBX) situé dans le réseau local pour demander à cet autocommutateur :
-- lors du transfert d'une première communication (B1-B2) déjà établie dans le réseau local (WLAN) **sans passer par le réseau global (PLMN),** et devant être transférée dans un réseau global (PLMN),
--- l'établissement d'une seconde communication (B1-B3) entre le terminal bi-mode et un second terminal, via le réseau local (WLAN) **et** le réseau global (PLMN) ;
--- puis l'établissement d'une conférence téléphonique (B1-B2-B3) réunissant la première et la second communication ;
--- puis le relâchement la première communication (B1-B2) en laissant subsister la seconde communication (B1-B3) ;
-- lors du transfert d'une première communication (B4-B5) déjà établie dans un réseau global (PLMN) **et** un réseau local (WLAN), et devant être transférée dans ce réseau local (WLAN) **sans passer par ce réseau global (PLMN),** envoyer des messages à un autocommutateur (PBX) situé dans le réseau local (WLAN), pour demander à cet autocommutateur :
--- l'établissement d'une seconde communication (B5-B6) entre ce terminal bi-mode et un second terminal, via le réseau local (WLAN) **sans** passer par le réseau global (PLMN) ;
--- puis l'établissement d'une conférence téléphonique (B4-B5-B6), réunissant la première et la second communication ;
--- puis le relâchement de la première communication (B4-B5) en laissant subsister la seconde communication (B5-B6).

8. Terminal selon la revendication 7, **caractérisé en ce que** lesdits moyens de commande (CM) sont aptes à commander les interfaces radio pour envoyer à un autocommutateur (PBX) une demande d'établissement d'une seconde communication, contenant un numéro appelant et un numéro appelé qui sont **identiques au numéro de ce terminal** dans un plan de numérotation public ;
et son aptes à :
- recevoir une notification d'appel contenant un numéro appelant et un numéro appelé,
- analyser ce numéro de l'appelant,
- détecter si le numéro appelant est identique au numéro appelé,
- et, si c'est le cas, accepter l'établissement d'une seconde communication, puis demander une mise en conférence de cette seconde communication avec la première communication.

9. Terminal selon la revendication 7, **caractérisé en ce que** lesdits moyens de commande (CM) sont aptes à commander les interfaces radio pour envoyer à un autocommutateur (PBX) une demande d'établissement d'appel contenant un numéro appelé prédéterminé **spécifique** pour une demander un transfert de communication.

## Revendications modifiées

### Revendications modifiées conformément à la règle 137(2) CBE.

**1.** Procédé de transfert d'une communication téléphonique (B1-B2), établie entre un terminal sans fil bi-mode (T1) et un autre terminal (T2), le terminal bi-mode ayant accès simultanément à un réseau sans fil global (PLMN) et à un réseau sans fil local (WLAN), ce dernier comportant un autocommutateur (PBX) apte à réaliser une conférence téléphonique à trois, et possédant une liaison (IPL) vers le réseau global (PLMN) ; cette communication (B1, B2) étant supportée d'abord par le réseau local (WLAN) **sans** passer par le réseau global (PLMN), et devant être ensuite supportée par le réseau local (WLAN) **et** le réseau global (PLMN) ; consistant à établir une seconde communication (B3-B2) entre le terminal bi-mode (T1) et le second terminal (T2) via le réseau local (WLAN) **et** le réseau global (PLMN) puis relâcher la première communication en laissant subsister la seconde communication (B1- B3) ;
**caractérisé en ce que** :
- le terminal bimode (T1) envoie un message à un commutateur (MSC) du réseau global (PLMN) pour demander à l'autocommutateur (PBX) du réseau sans fil local (WLAN) l'établissement d'une seconde communication (B3-B2) entre ce terminal bi-mode (T1) et lui-même via le réseau global (PLMN) **et**) le réseau local (WLAN) ;
- puis le terminal bimode (T1) demande à l'autocommutateur (PBX) du réseau sans fil local (WLAN) l'établissement d'une conférence téléphonique (B1-B2-B3) réunissant la première et la second communication ;
- puis le terminal bimode (T1) demande à l'autocommutateur (PBX) du réseau sans fil local (WLAN) le relâchement la première communication en laissant subsister la seconde communication (B1- B3) .

**2.** Procédé selon la revendication 1, **caractérisé en ce que** pour demander à cet autocommutateur (PBX) l'établissement d'une seconde communication (B3-B2) entre le terminal bi-mode (T1) et le second terminal (T2) via le réseau local (WLAN) **et** le réseau global (PLMN), il consiste à envoyer du terminal bimode (T1) à l'autocommutateur (PBX) une demande d'établissement d'appel contenant un numéro appelant et un numéro appelé qui sont constitués tous les eux par le **numéro du terminal** bi-mode (T1) dans le plan de numérotation du réseau local.

**3.** Procédé selon la revendication 1, **caractérisé en ce que** pour demander à cet autocommutateur (PBX) l'établissement d'une seconde communication (B3-B2) entre le terminal bi-mode (T1) et le second terminal (T2) via le réseau local (WLAN) **et** le réseau global (PLMN), il consiste à envoyer du terminal bimode (T1) à l'autocommutateur (PBX) une demande d'établissement d'appel contenant un numéro prédéterminé **spécifique** pour demander un transfert de communication.

**4.** Procédé de transfert d'une communication téléphonique (B4-B5), établie entre un terminal sans fil bi-mode (T3) et un autre terminal (T4), le terminal bi-mode ayant accès simultanément à un réseau sans fil global (PLMN) et à un réseau sans fil local (WLAN), ce dernier comportant un autocommutateur (PBX) apte à réaliser une conférence téléphonique à trois et possédant une liaison (IPL) vers le réseau global (PLMN) ; cette communication (B4-B5) étant supportée d'abord par le réseau local (WLAN) **et** le réseau global (PLMN), et devant être ensuite supportée par le réseau local (WLAN) **sans passer par le réseau global (PLMN)**; consistant à établir une seconde communication (B5-B6) entre ce terminal bi-mode (T3) et le second terminal (T4) via le réseau local (WLAN) **sans passer par** le réseau global (PLMN), puis relâcher la première communication en laissant subsister la seconde communication (B5-B6) ;
**caractérisé en ce que** :
- le terminal bimode (T3) demande à cet autocommutateur (PBX) du réseau local (WLAN) l'établissement d'une seconde communication (B5-B6) entre ce terminal bi-mode (T3) et le second terminal (T4) via le réseau local (WLAN) **sans passer par** le réseau global (PLMN) ;
- puis le terminal bimode (T3) demande à cet autocommutateur (PBX) l'établissement d'une conférence téléphonique (B4-B5-B6) réunissant la première et la second communication ;
- puis le terminal bimode (T3) demande à cet autocommutateur (PBX) le relâchement de la première communication (B4-B5) en laissant subsister la seconde communication (B5-B6) .

**5.** Procédé selon la revendication 4, **caractérisé en ce que** pour demander à cet autocommutateur (PBX) l'établissement d'une seconde communication (B5-B6) entre ce terminal bi-mode (T3) et le second terminal (T4) via le réseau local (WLAN) **sans** le réseau global (PLMN), il consiste à envoyer terminal bimode (T3) à cet autocommutateur (PBX) une demande d'établissement d'appel contenant un numéro appelant et un numéro appelé qui sont constitués tous les eux par le **numéro du terminal** bi-mode (T3) dans le plan de numérotation du premier réseau (WLAN).

**6.** Procédé selon la revendication 4, **caractérisé en ce que** pour demander à cet autocommutateur (PBX) l'établissement d'une seconde communication (B5-B6) entre ce terminal bi-mode (T3) et le second terminal (T4) via le réseau local (WLAN) **sans** le réseau global (PLMN), il consiste à envoyer terminal bimode (T3) à cet autocommutateur (PBX) une demande d'établissement d'appel contenant un numéro prédéterminé **spécifique** pour demander un transfert de communication.

**7.** Terminal téléphonique sans fil bi-mode (T1 ; T3), comportant deux interfaces radio (WI, GI) respectivement aptes à établir une première et une seconde communications respectivement et simultanément dans un réseau local (WLAN) et un réseau global (PLMN) de télécommunication sans fil ; **caractérisé en ce qu'**il comporte en outre des moyens de commande (CM) couplés aux deux interface radio, et aptes à commander les interfaces radio pour envoyer des messages à un autocommutateur (PBX) situé dans le réseau local (WLAN) pour demander à cet autocommutateur :
-- lors du transfert d'une première communication (B1-B2) déjà établie dans le réseau local (WLAN) **sans passer par le réseau global (PLMN)**, et devant être transférée dans un réseau global ( PLMN),
--- l'établissement d'une seconde communication (B1-B3) entre le terminal bi-mode et un second terminal, via le réseau local (WLAN) et le réseau global (PLMN) ;
--- puis l'établissement d'une conférence téléphonique (B1-B2-B3) réunissant la première et la second communication ;
--- puis le relâchement la première communication (B1-B2) en laissant subsister la seconde communication (B1-B3) ;
-- lors du transfert d'une première communication (B4-B5) déjà établie dans un réseau global (PLMN) **et** un réseau local (WLAN), et devant être transférée dans ce réseau local (WLAN) **sans passer par ce réseau global (PLMN),** envoyer des messages à un autocommutateur (PBX) situé dans le réseau local (WLAN), pour demander à cet autocommutateur :
--- l'établissement d'une seconde communication (B5-B6) entre ce terminal bi-mode et un second terminal, via le réseau local (WLAN) **sans** passer par le réseau global (PLMN) ;
--- puis l'établissement d'une conférence téléphonique (B4-B5-B6), réunissant la première et la second communication ;
--- puis le relâchement de la première communication (B4-B5) en laissant subsister la seconde communication (B5-B6).

**8.** Terminal selon la revendication 7, **caractérisé en ce que** lesdits moyens de commande (CM) sont aptes à commander les interfaces radio pour envoyer à un autocommutateur (PBX) situé dans le réseau local (WLAN) une demande d'établissement d'une seconde communication, contenant un numéro appelant et un numéro appelé qui sont **identiques au numéro de ce terminal** dans un plan de numérotation public ;
et son aptes à :
- recevoir une notification d'appel contenant un numéro appelant et un numéro appelé,
- analyser ce numéro de l'appelant,
- détecter si le numéro appelant est identique au numéro appelé,
- et, si c'est le cas, accepter l'établissement d'une seconde communication, puis demander une mise en conférence de cette seconde communication avec la première communication.

**9.** Terminal selon la revendication 7, **caractérisé en ce que** lesdits moyens de commande (CM) sont aptes à commander les interfaces radio pour envoyer à un autocommutateur (PBX) situé dans le réseau local (WLAN) une demande d'établissement d'appel contenant un numéro appelé prédéterminé **spécifique** pour une demander un transfert de communication.
